(19) Europäisches Patentamt
European Patent Office
Office européen des brevets

(11) **EP 2 166 544 B1**

(12) **EUROPEAN PATENT SPECIFICATION**

(45) Date of publication and mention
of the grant of the patent:
**31.12.2014 Bulletin 2015/01**

(51) Int Cl.:
***H01B 1/22*** *(2006.01)* ***C09J 9/02*** *(2006.01)*

(21) Application number: **08016643.2**

(22) Date of filing: **22.09.2008**

(54) **Anisotropic conductive material**

Anisotropisches Leitmaterial

Matériau conducteur anisotrope

(84) Designated Contracting States:
**DE FR GB**

(43) Date of publication of application:
**24.03.2010 Bulletin 2010/12**

(73) Proprietor: **Teamchem Materials Company**
**Bade City**
**T'ao yuan (TW)**

(72) Inventor: **Yeh, Syh-Tau**
**Taoyuan City,**
**Taoyuan County (TW)**

(74) Representative: **Schaeberle, Steffen**
**Hoefer & Partner**
**Patentanwälte**
**Pilgersheimer Strasse 20**
**81543 München (DE)**

(56) References cited:
**EP-A- 1 832 636        WO-A-03/000816**
**JP-A- 2004 238 483     US-B1- 6 452 476**

**Description**

The present invention relates to a composition of anisotropic conductive material according to the pre-characterizing clause of claim 1.

An anisotropic conductive film typically consists of conductive particles, such as silver particles or silver-plated organic particles, dispersed in a thermosetting latent-curing epoxy resin system. The anisotropic conductive film is placed between two substrates to be connected, and heat and pressure are applied to melt the resin and force the two substrates close together so that surfaces of the two connecting substrates are both in contact with the conductive particle. Electricity is conducted through the conductive particle and freely flows between the two substrates, but not along the anisotropic conductive film because the conductive particles are sparsely dispersed enough to avoid contact with each other.

Most present commercial anisotropic conductive film products need to be hot pressed to a film thickness equal to the diameter of the conductive particle. Furthermore, smaller conductive particles used in the commercial anisotropic conductive film products can increase conductivity, but this also raises the possibility of conduction failure.

This in mind, the present invention aims at providing a composition of anisotropic conductive material that avoids conduction failure and provides a much wider operation window for the anisotropic conductivity.

This is achieved by a composition of anisotropic conductive material according to claim 1. The dependent claims pertain to corresponding further developments and improvements.

As will be seen more clearly from the detailed description below, the claimed composition of anisotropic conductive material includes a conductive, filamentary powder that has a characteristic three-dimensional, chain-like network structure.

In the following, the invention is further illustrated by way of example, taking reference to the accompanying drawings. Thereof:

FIG. 1     illustrates conductive spherical particles of different sizes of an anisotropic conductive film sandwiched between two conductive planes;

FIG. 2     shows one conductive particle with a radius of 2r of an anisotropic conductive film, which is sandwiched between two conductive planes, wherein the thickness of the anisotropic conductive film is 4r;

FIG. 3     illustrates eight smaller conductive, spherical particles with a radius of r, which are dispersed and sandwiched between two conductive planes, wherein the distance between the two conductive planes is 2r;

FIG. 4     illustrates two substrate surfaces, bumps between the two substrate surfaces, ACF and conductive, spherical particles dispersed in the ACF;

FIG. 5     is a schematic diagram showing one single filamentary aggregate unit of the filamentary nickel powder according to this invention;

FIG. 6     illustrates a dual-layer filamentary aggregate unit comprising eight fine primary particles between the two conductive planes;

FIG. 7     demonstrates reference x-, y- and z-coordinate systems and respective conductive planes; and

FIG. 8     illustrates the compression of an anisotropic conductive material provided by this invention, where good electric contacts can be created despite irregularities of particle sizes and shapes with the filamentary conductive nickel powder.

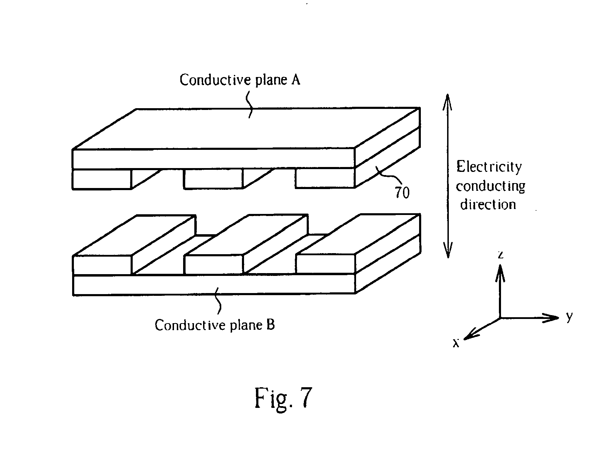

The present invention relates to an anisotropic conductive material that can be applied to bond two electronic components or two conductive surfaces/planes together. The anisotropic conductive material allows electricity to be conducted only in the z-direction (or in the thickness direction), but not along the x- and y- directions (the x- and y-directions are parallel to the substrate surfaces to be bonded together, and the z-direction is perpendicular to the substrate surfaces). The aforesaid reference x-, y- and z-coordinate systems and respective conductive planes are demonstrated in FIG. 7. As shown in FIG. 7, the anisotropic conductive material (not explicitly shown) is filled between the conductive plane A and conductive plane B with bumps 70 there-between.

A filamentary nickel powder dispersed in a thermosetting epoxy resin forms the basis of an anisotropic conductive material system. Various forms of the anisotropic conductive materials, such as anisotropic conductive film (ACF), anisotropic conduct adhesive (ACA), etc. can be derived from this basic composition of the invention.

This anisotropic conductive material can be processed to form an anisotropic conductive adhesive (ACA) that is capable of permanently bonding two electronic components together. Alternatively, it can also be formulated into a one-component latent cuing system, which is coated onto a release liner and then dried to form a thermosetting anisotropic conductive film (ACF). When this anisotropic conductive film (ACF) is thermally cured, it becomes an anisotropic conductive sheet (ACS).

At present, the use of anisotropic conductive adhesive films in the TFT-LCD industries for connecting fine pitches is a pretty common practice. Generally, most commercially available ACF products used for this purpose are composed of conductive particles of 2-5$\mu$m in diameter and a latent-curing thermosetting epoxy resin. The conductive particles are typically polymeric sphere with Ni/Au overcoat or pure, spherical nickel. In some cases, a thin insulating polymer is coated on the Ni/Au overcoat to form a multiple-layered spherical structure. The polymeric sphere with Ni/Au overcoat is expensive.

For the ACF to function properly, the requirements for highly uniform particle size distribution of the conductive particles are very strict. Ordinarily, the particle size variation has to be within several tenths of a micron. Otherwise, it could lead to inefficient utilization of the conductive particles and cause low conductivities.

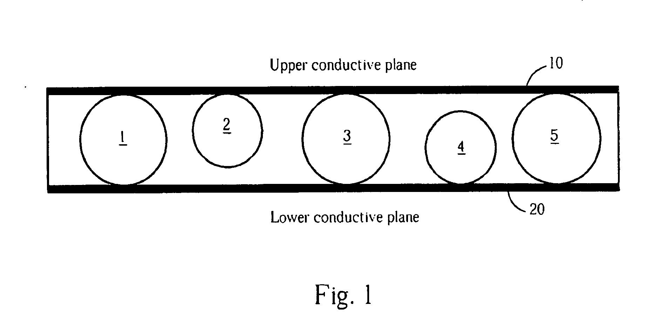

The problem of particle size variations is illustrated in FIG. 1 wherein an ACF containing conductive particles of different sizes is sandwiched between two parallel conductive planes 10 and 20. As specifically indicated in this figure, the smaller particles 2 and 4 fail to connect the two conductive planes, resulting in decreased electric conductivity.

Moreover, these ineffective, smaller particles make the conduction of electricity in the substrate plane direction (i.e., the direction perpendicular to the thickness direction) more likely, which is undesirable. Therefore, it is important to have conductive particles of substantially equal size so that they can conduct electricity in the direction perpendicular to the substrate plane, which, however, is very difficult to achieve.

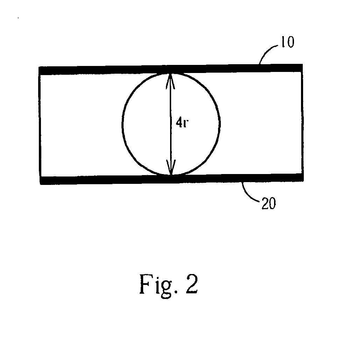

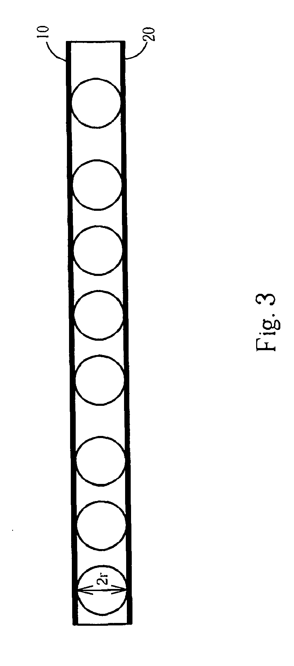

In addition to particle size distribution discussed above, particle size itself plays an even more important role in anisotropic conductivity. This can be illustrated by using one conductive, spherical particle with a radius of 2r (diameter = 4r) sandwiched between two parallel conductive planes 10 and 20, as shown in FIG. 2. This particle forms two contact points with the upper and the lower conductive planes 10 and 20. Assume this particle can be divided into eight smaller equal particles with a radius of r, as illustrated in FIG. 3. The eight smaller particles, in combination, have about the same volume as one larger particle of twice the radius, but form sixteen contact points with the two conductive planes 10 and 20.

Although the combined volume of these eight smaller particles of FIG. 3 is the same as that of the larger particle of FIG. 2, the smaller particles are able to create more contact points with the conductive planes. This suggests that the conductivity of the smaller particles could be eight times as much as that of the larger particle. Careful evaluation reveals this may be an exaggeration, as the curvature of the particle is not taken into account. The larger particle, with a smaller curvature, should be able to form a larger contact area with the conductive plane. Realistically, the conductivity is expected to be directly proportional to the specific surface area of the conductive particle and inversely proportional to the particle diameter. This can be expressed mathematically as:

$$ G \propto A_s \propto D^{-1} ...(eq.1) $$

$G$ : Electric conductivity

$A_s$ : Specific surface area of the conductive particle

$D$ : Diameter of the conductive particle

Using smaller conductive particles helps conductivity, but there is also an associated problem. Smaller particles mean a smaller gap between the conductive planes. This would not be a problem if the gap can be maintained constant. In real situations, however, a constant gap may be difficult to achieve. In such a case, the reduced gap can present a problem.

Taking into consideration that the larger particle could have a somewhat larger contact area, the more numerous smaller particles are still expected to conduct electricity better because of more contact points made with the conductive planes. On the other hand, the gap between the two conductive planes has to be reduced to 2r from 4r in order to achieve this.

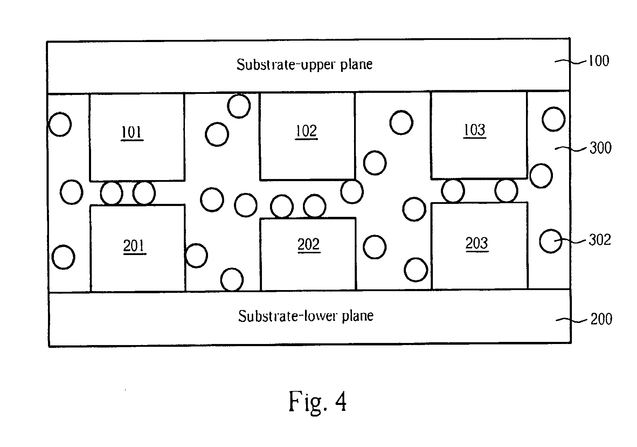

The reduced gap distance may be a problem when there is an uneven gap distribution between the two connected substrate surfaces 100 and 200 as illustrated in FIG. 4. FIG. 4 illustrates two substrate surfaces 100 and 200 such as an ITO substrate or a glass substrate, bumps 101, 102, 103, 201, 202 and 203 thereof between the two substrate surfaces, ACF 300 bonding the two substrate surfaces 100 and 200 and conductive, spherical particles 302 dispersed in the ACF 300.

As shown in FIG. 4, the conductive, spherical particles 302 fail to electrically connect the two bumps 102 and 202 in the middle because of a relatively large gap between the two bumps 102 and 202. The two bumps 102 and 202 fail to connect with each other because bump 202 is slightly lower than the others, resulting in a slightly larger gap between bumps 102 and 202. This increased gap makes it impossible to have good contacts between the conductive particles and the conductive planes 100 and 200, resulting in failed electric conductivity. Therefore, using smaller conductive particles can increase conductivity, but also raises the possibility of conduction failure.

It can be concluded that reducing the particle size helps to increase conductivity but at the cost of higher possibility of conduction or connection failure between two bumps.

According to one preferred embodiment of this invention, a filamentary powder is utilized to replace conventional spherical conductive particles as one major component of an anisotropic conductive material, which is capable of solving the above-mentioned problems. According to one preferred embodiment of this invention, the filamentary powder of 2-50 wt. % is dispersed in a thermosetting epoxy resin. The result is a material that exhibits improved anisotropic conductivity.

According to this invention, the filamentary powder has a characteristic three-dimensional, chain-like network of extra fine particles. More specifically, the filamentary powder consists of filamentary aggregates of fine particles in a fused fashion. Each of the fine particles has a spiked, spherical structure and a very small particle size ranging between $0.2\text{-}0.5\mu m$.

The sizes of the aggregates are difficult to measure due to their irregular physical contours, but are estimated to be in the range of $5\text{-}50\mu m$ in general. Preferable examples of the filamentary powder include, but are not limited to, Inco® nickel power Type 210, 210H, 240 and 255.

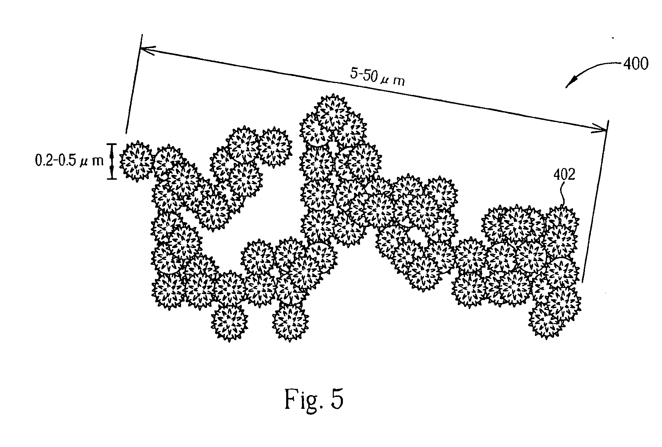

FIG. 5 is a schematic diagram showing one single filamentary aggregate unit 400 of the filamentary nickel powder. The filamentary aggregate unit 400 consists of fused fine particles 402 (primary particles). Each of the fine particles 402 has a dimension of several tenths of a micron. The filamentary aggregate unit 400 (or secondary particle) has a dimension of greater than several microns. The porous structure can be crushed and deformed when being subjected to the pressure from a hot press, thus creating better contact with the conductive planes. This in turn leads to better electric conductivity and lowered electric resistance.

Unlike the present commercial anisotropic conductive films, which need to be hot pressed to a film thickness equal to the diameter of the conductive particle, this invention provides an anisotropic conductive adhesive or film that is functional even when the final film thickness is greater than 5 microns. Therefore, it can provide anisotropic conductivity under a much wider operation window.

As previously mentioned, the filamentary nickel powder has a three-dimensional chain-like structure created by the fusion of many small nickel primary particles. The primary nickel particles can be viewed as spiked spheres with diameters ranging from $0.2\mu m$ to $0.5\mu m$. They fuse together to form a physically unbreakable secondary structure of aggregates (powders), which are irregular in shape and size. These filamentary nickel powders (or aggregates) are porous by nature, allowing them to be compressed under a pressing force.

This compressibility is a major factor that distinguishes it from the other type of conductive particles, i.e. various types of conductive spherical particles. Although many of the metal-coated polymeric conductive spheres also have some compressibility, they are by no means as compressible as the filamentary nickel powders.

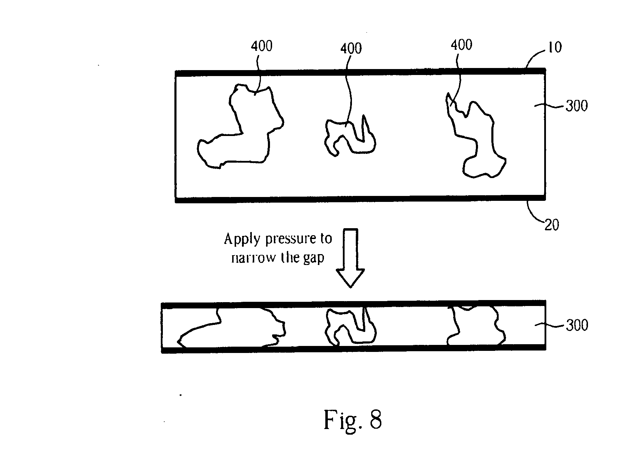

The compressibility of the filamentary nickel powder is analogous to that of puffed popcorns. It means that they can be easily compressed and deformed under pressure, creating better contacts with the conductive planes 10 and 20, resulting in better electric conductivity. A schematic drawing illustrating this phenomenon is shown in FIG. 8. FIG. 8 also shows that the variability in the original shapes and sizes of these filamentary nickel powders 400 dispersed in the ACF 300 is less of an issue because these powders 400 can be compressed and deformed to fit in the gaps.

There is also a second reason for the filamentary nickel powder being a better anisotropic conducive particle, and that is due to their relatively small primary particle. Because the primary particles of the filamentary nickel powders are relatively small ($0.2\text{-}0.5\mu m$ for these versus $2\text{-}5\mu m$ for traditional conductive spheres in particle diameters), the specific surface area of the filamentary nickel powders should be around ten times that of the traditional conductive spheres. This means a ten-fold increase of the electric conductivity for the filamentary nickel powders.

Additionally, the filamentary nickel powders are also commercial products that are readily available and relatively inexpensive. Examples of commercially available filamentary nickel powder are Inco® Type 210, 210H, 240 and 255.

Application of the filamentary nickel powder is provided by this invention to be a solution for prior art problems. By applying the filamentary nickel powder, the present invention anisotropic conductive adhesive, anisotropic conductive film or anisotropic conductive sheet can be applicable to the bonding of two substrate surfaces with very small gaps, providing higher anisotropic conductivity.

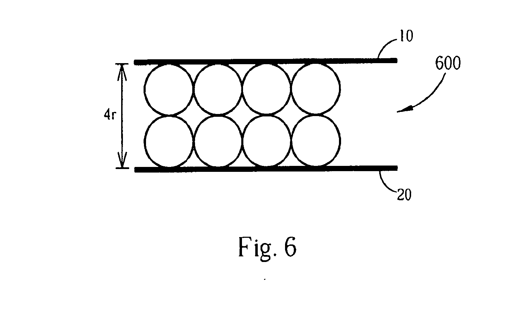

The reason behind this higher anisotropic conductivity is demonstrated in FIG. 6 wherein eight fine primary particles form a dual-layer filamentary aggregate unit 600. In this case, theoretically, each secondary particle is able to form four contact points each with the conductive planes. This results in a four-fold increase of the conductivity, but with no change in the gap distance (gap distance is 4r, like FIG. 2).

As previously mentioned, the electrical conductivity is directly proportional to the particle surface area or inversely proportional to the particle diameter, because a higher surface area means higher probability of contact with the conductive planes.

Therefore, using the smaller primary particles with larger surface areas improves the electrical conductivity. The effective gap distance between the connected substrates, however, is only affected by the size of the filamentary aggregate unit or secondary particle. To have larger aggregate of many smaller primary particles means high anisotropic conductivity can be achieved with no need to have very small connected substrate gaps.

According to this invention, the thermosetting epoxy resin consists of an epoxy resin or a blend of epoxy resins with appropriate cuing system that consists of hardener(s) and catalyst(s). Acid anhydride was found to be a very effective hardener for this type of application. The epoxy resin that reacts with acid anhydride has been found to possess superior chemical and thermal resistance. It also has excellent adhesion to almost any substrate due to its slow but progressive reaction.

Tertiary amines such as tetrabutyl ammonium bromide or triphenyl phosphine are all effective catalysts for the epoxy resin - acid anhydride curing system. Some melamine-formaldehyde resins catalyzed by 0.2-1.5 wt. % p-toluene sulfonic acid are also effective curing system for this application.

Phenolic resins catalyzed by tertiary amines such as tetra butyl ammonium bromide or tri-phenyl phosphine also work very well. Many imidazoles that can function as a hardener and catalyst at the same time are also effective curing systems.

Among the other anisotropic conductive materials, anisotropic conductive sheet (ACS) is the simplest in concept, although potentially the most difficult to put into manufacturing practice. It is usually used for making temporary electric connections, such as connecting IC chips to an electric circuit board for testing purposes.

According to one preferred embodiment of this invention, an anisotropic conductive material composition comprises a filamentary nickel powder such as Inco® nickel power Type 210, 210H, 240 or 255 dispersed in a thermosetting epoxy resin.

The amount of the filamentary nickel powder is 2-50% depending on the basis of the weight of the mixture. The thermosetting epoxy resin system is composed mainly of epoxy resin(s), hardener(s) and appropriate catalyst(s). Other suitable additives, such as de-foamer(s), thixotropic reagent(s) may be added to the thermosetting epoxy resin system when needed.

The epoxy resin(s) may be Bisphenol-A, Bisphenol-F, Phenolic, Novolac or any other modified epoxy resins. Flexible epoxy resins, such as CVC Specialty Chemicals Hypox DA-323 (Dimer Acid Adducted to an Epoxidized Bisphenol A Resin), Dow Chemicals XZ92466.00 or XZ92465.00 have all been found to contribute to better adhesion, and therefore are preferably used as examples for this invention.

Among the various hardeners for epoxy resins, acid anhydrides are particularly useful. Their slower reactions with epoxy resins contribute to better adhesion. Common acid anhydrides, such as Methyl Tetrahydrophthalic Anhydride, Methyl Hexahydrophthalic Anhydride, Hexahydrophthalic Anhydride, Succinic Anhydride, etc. have all been found useful.

Succinic Anhydride, due to its more flexible nature of molecules, tends to contribute to better adhesion, and thus is preferably used in the examples for this invention. A catalyst that has been found to be effective in the cuing of acid anhydrides and epoxy resins includes tertiary amines, such as Tetra Butyl Ammonium Bromide (TBAB), Triphenyl Phosphine, etc.

Table 1 demonstrates four examples of two-part anisotropic conductive adhesives using filamentary nickel powders and epoxy resins cured by acid anhydrides. These examples are illustrated here to demonstrate the basic concept of this invention, and they are by no means meant to be restrictive. Ingredients 1-7 are weighed, mixed and milled by a 3-roll mill. Ingredients 8-9 are added to the milled ingredients of 1-7, and then dispersed by a high-speed agitator. Ingredients 10-11 are acid-anhydride hardeners, which are added immediately before application.

*Table 1*

| No. | Ingredients | Example 1 | Example 2 | Example 3 | Example 4 |
|---|---|---|---|---|---|
| 1 | Epoxy Resin DA-323* | 100.0 | 100.0 | 100.0 | 100.0 |
| 2 | Dipropylene Glycol Monomethyl Ether (DPM) | 35.0 | 35.0 | 35.0 | 35.0 |
| 3 | De-foamer: TSA-750S ** | 2.5 | 2.5 | 2.5 | 2.5 |
| 4 | Triphenyl Phosphine | 0.6 | 0.6 | 0.0 | 0.0 |
| 5 | Tetra Butyl Ammonium Bromide (TBAB) | 0.0 | 0.0 | 0.6 | 0.6 |
| 6 | Fumed Silica Aerosil R974 | 3.5 | 3.5 | 3.5 | 3.5 |
| 7 | Fumed Silica Aerosil A380 | 3.5 | 3.5 | 3.5 | 3.5 |
| | Sum | 145.0 | 145.0 | 145.0 | 145.0 |
| Ingredients 1-7 are weighed, mixed and milled by 3-roll mill. | | | | | |
| 8 | Filamentary Nickel Powder: Inco Type 210 | 25.0 | 25.0 | 25.0 | 25.0 |
| 9 | Dipropylene Glycol Monomethyl Ether (DPM) | 15.0 | 15.0 | 15.0 | 15.0 |

(continued)

Ingredients 1-7 are weighed, mixed and milled by 3-roll mill.

| | | | | | |
|---|---|---|---|---|---|
| | Sum | 185.0 | 185.0 | 185.0 | 185.0 |

Ingredients 8-9 are added to the milled ingredients of 1-7, and then dispersed by a high-speed agitator.

| | | | | | |
|---|---|---|---|---|---|
| 10 | Dodecenyl Succinic Anhydride (DDSA) | 25.0 | 0.0 | 25.0 | 0.0 |
| 11 | Methyl Hexahydrophthalic Anhydride (MHHPA) | 0.0 | 20.0 | 0.0 | 20.0 |
| | Sum | 210.0 | 205.0 | 210.0 | 205.0 |

Ingredients 10-11 are acid-anhydride hardeners. They are added immediately before application.

All in parts per hundred parts (phr) by weight.
* Dimer Acid Adducted to an Epoxidized Bisphenol A Resin; CVC Specialty Chemicals.
** silicone-based defoamer; GE-Toshiba.

In addition to acid anhydrides, other epoxy resin hardeners, such as melamine-formaldehyde resins, phenolic resins, imidazoles, etc. have all been used successfully in the composition anisotropic adhesives. Melamine-formaldehyde resins are particularly useful in the formulation of one-pot latent curing system due to their excellent storage stability.

Particular examples of this are given in examples 5-6 as demonstrated in Table 2, wherein toluene sulfonic acid is the catalyst that can also be stored separately, but mixed-in with the other ingredients immediately before the actual application. The storage stability can be improved. Ingredients 1-6 are weighed, mixed and milled by 3-roll mill. Ingredients 7-10 are added to the milled base of 1-6, and then dispersed by a high-speed agitator.

| Table 2 | | | |
|---|---|---|---|
| No. | Ingredients | Example 5 | Example 6 |
| 1 | Epoxy Resin DA-323* | 100.0 | 30.0 |
| 2 | Dow Epoxy Resin XZ92465.00 | 0.0 | 70.0 |
| 3 | Dipropylene Glycol Monomethyl Ether (DPM) | 35.0 | 10.0 |
| 4 | De-foamer: TSA-750S ** | 2.0 | 2.0 |
| 5 | Fumed Silica Aerosil R974 | 3.0 | 3.0 |
| 6 | Fumed Silica Aerosil A380 | 3.0 | 3.0 |
| | Sum | 143.0 | 118.0 |

Ingredients 1-6 are weighed, mixed and milled by 3-roll mill.

| | | | |
|---|---|---|---|
| 7 | Filamentary Nickel Powder: Inco Type 210 | 10.0 | 10.0 |
| 8 | Dipropylene Glycol Monomethyl Ether (DPM) | 5.0 | 5.0 |
| 9 | Melamine-formaldehyde resin Cymel-1158 *** | 25.0 | 45.0 |
| 10 | Toluene Sulfonic Acid**** | 1.0 | 1.0 |
| | Sum | 184.0 | 179.0 |

Ingredients 7-10 are added to the milled base of 1-6, and then dispersed by a high-speed agitator.

All in parts per hundred parts (phr) by weight.
* Dimer Acid Adducted to an Epoxidized Bisphenol A Resin; CVC Specialty Chemicals.
** silicone-based defoamer; GE-Toshiba.
*** n-butylated high amino resin; Cytec Industries.
**** Toluene sulfonic acid is the catalyst. It can also be stored separated, but mixed-in with the other ingredients right before the actual application. The storage stability can be improved.

All combinations and sub-combinations of the above-described features also belong to the invention.

**Claims**

1. A composition of anisotropic conductive material, **characterized by**:

a base resin system; and
a conductive, filamentary powder (400) dispersed in the base resin system, wherein the conductive, filamentary powder (400) has a characteristic three-dimensional, chain-like network structure which is created by fusion of a plurality of extra fine primary particles (402),
**characterized in that** the conductive, filamentary powder (400) is a filamentary nickel powder, and the extra fine primary particles (402) have a size ranging between 0.2-0.5μm.

2. The composition of anisotropic conductive material according to claim 1, **characterized in that** the extra fine primary particles (402) has a weight percentage of between 2 to 50%.

3. The composition of anisotropic conductive material according to claim 1, **characterized in that** the base resin system is a thermosetting epoxy resin system containing epoxy resin or blends of epoxy resins selected from a group consisting of Bisphenol-A, Bisphenol-F, Phenolic, Novolac, modified epoxy resins, flexibilized epoxy resins, and Dimer Acid Adducted Bisphenol-A epoxy resins.

4. The composition of anisotropic conductive material according to claim 1, further **characterized by** hardener selected from a group consisting of acid anhydride, melamine formaldehyde resin, imidazole, and modified amine.

5. The composition of anisotropic conductive material according to claim 1, further **characterized by** catalyst, defoamer, and thixotropic reagent.


**Patentansprüche**

1. Zusammensetzung eines anisotrop leitfähigen Materials, **gekennzeichnet durch**:

ein Basisharz-System; und
ein leitfähiges faserförmiges Pulver (400), das im Basisharz-System dispergiert ist, wobei das leitfähige faserförmige Pulver (400) eine charakteristische, dreidimensionale, kettenartige Netzstruktur aufweist, die durch eine Fusion einer Vielzahl von extra feinen Primärpartikeln (402) erzeugt ist, **dadurch** gekennzeichnet, dass das leitfähige faserförmige Pulver (400) ein faserförmiges Nickelpulver ist, und die extra feinen Primärpartikel (402) eine Größe im Bereich von 0,2 - 0,5 μm aufweisen.

2. Zusammensetzung eines anisotrop leitfähigen Materials gemäß Anspruch 1, **dadurch gekennzeichnet, dass** die extra feinen Primärpartikel (402) einen Gewichtsanteil von 2 bis 50% aufweisen.

3. Zusammensetzung eines anisotrop leitfähigen Materials gemäß Anspruch 1, **dadurch gekennzeichnet, dass** das Basisharz-System ein duroplastisches Epoxidharz-System ist, das Epoxidharz oder Mischungen von Epoxidharzen enthält, die aus einer Gruppe bestehend aus Bisphenol-A, Bisphenol-F, Phenol, Novolac, modifizierten Epoxidharzen, flexibilisierten Epoxidharzen und Dimersäure adduzierten Bisphenol-A-Epoxidharzen ausgewählt sind.

4. Zusammensetzung eines anisotrop leitfähigen Materials gemäß Anspruch 1, ferner **gekennzeichnet durch** einen Härter, der aus einer Gruppe bestehend aus Säureanhydrid, Melaminformaldehydharz, Imidazol und modifiziertem Amin ausgewählt ist.

5. Zusammensetzung eines anisotrop leitfähigen Materials gemäß Anspruch 1, ferner **gekennzeichnet durch** einen Katalysator, Entschäumer und ein thixotropes Reagenz.


**Revendications**

1. Composition d'un matériau conducteur anisotrope, **caractérisée par** :

un système de résine de base ; et
une poudre filamenteuse, conductrice (400) dispersée dans le système de résine de base, où la poudre filamenteuse, conductrice (400) a une structure de réseau en forme de chaîne, tridimensionnelle caractéristique qui est créée par fusion d'une pluralité de particules primaires extra-fines (402), **caractérisée en ce que** la poudre filamenteuse, conductrice (400) est une poudre de nickel filamenteuse, et

les particules primaires extra-fines (402) ont une taille comprise dans la plage allant de 0,2 à 0,5 $\mu$m.

2. Composition d'un matériau conducteur anisotrope selon la revendication 1, **caractérisée en ce que** les particules primaires extra-fines (402) ont un pourcentage en poids compris entre 2 et 50%.

3. Composition d'un matériau conducteur anisotrope selon la revendication 1, **caractérisée en ce que** le système de résine de base est un système de résine époxy thermodurcissable contenant une résine époxy ou des mélanges de résines époxy choisie(s) dans un groupe constitué de résines époxy modifiées, de Bisphénol-A, de Bisphénol-F, phénoliques, novolaques, de résines époxy flexibilisées, et de résines époxy de Bisphénol-A additionnées d'acide dimère.

4. Composition d'un matériau conducteur anisotrope selon la revendication 1, **caractérisée en outre par** un durcisseur choisi dans le groupe constitué d'anhydride d'acide, d'une résine mélamine-formaldéhyde, d'imidazole, et d'amine modifiée.

5. Composition d'un matériau conducteur anisotrope selon la revendication 1, **caractérisée en outre par** un catalyseur, un agent anti-mousse et un réactif thixotrope.

Upper conductive plane

10

1 2 3 4 5

Lower conductive plane

20

Fig. 1

Fig. 2

Fig. 3

Fig. 4

EP 2 166 544 B1

Fig. 5

Fig. 6

Conductive plane A

Electricity
conducting
direction

70

z

y

x

Conductive plane B

Fig. 7

Fig. 8

Apply pressure to
narrow the gap